# EUROPEAN PATENT APPLICATION

(11) **EP 1 214 890 A1**
(43) Date of publication of application: **19.06.2002**
(21) Application number: 00870294.6
(22) Date of filing: 13.12.2000
(51) Int. Cl.: A23L 1/16, A23L 1/0522, A23L 1/168

(54) **Process for the production of rice pasta**

(71) Applicant: Etablissementen Joseph Soubry, in het kort "Etabl. J. Soubry", 8800 Roeselaere (BE)
(72) Inventor: Soubry, Michel, 8800 Roeselare (BE); Muys, Adelheid, 8500 Kortrijk (BE)
(74) Representative: Van Reet, Joseph

(57) **Abstract**

The process for the production of rice pasta comprises the steps of mixing at least ground rice with water to prepare a dough; at least partially gelatinising the dough by heating and kneading it under pressure in an extruder; and extruding the gelatinised dough by means of said extruder in the form of pasta. For preparing 100 parts on dry matter of the dough, use is made of 50 to 82 parts on dry matter of ground rice, of 18 to 50 parts on dry matter of potato starch and further preferably of an emulsifier like a monoglyceride. An advantage of this process is that no binder is required to be able to extrude the pasta and to obtain a good cooked firmness and that the pasta can more particularly be extruded on a conventional pasta extruder.

## Description

The present invention relates to a process for the production of rice pasta comprising the steps of mixing at least ground rice with water to prepare a dough, at least partially gelatinising the dough by heating and kneading it under pressure in an extruder and extruding the gelatinised dough by means of said extruder in the form of pasta.

A difference between rice pasta and regular wheat pasta is that regular wheat pasta's contain an amount of gluten whereas rice pasta is free of gluten. In regular wheat pasta's the gluten produce a network binding the starch grains. When extruding regular wheat pasta it is important to maintain the temperature of the dough below for example 45° C in order to avoid deteriorations of the gluten. In conventional wheat pasta extruders, this is achieved by circulating a cooling liquid through the cooling jacket of the extruder in order to remove the heat which is generated in the extruder amongst others by the frictional forces occurring therein. Since the conventional pasta extruders have only to build up the required pressure to achieve a coherent extruded pasta, they do not provide a long residence time in order to keep the dimensions of the extruder, and therefore the cost thereof, to a minimum for a certain production capacity. Moreover, the heat transfer capacity of the single cooling jacket around the extruder screw, or in other words the inner heat transfer surface of the extruder, is also relatively low in view of the fact that the heat generated by the frictional forces is not excessively high. An essential difference with so-called extrusion cookers, wherein the dough is first heated and subsequently cooled again, is that a conventional pasta extruder shows only one jacket for circulating a fluid around the extruder chamber and a further jacket around the extruder head.

Due to the presence of gluten in wheat flour, the pasta produced with the conventional pasta extruders has good strength, with good cooked firmness and low cooking losses. However, rice pasta prepared in this way has poor strength with low cooked firmness and high cooking losses due to the absence of gluten.

A conventional process for obtaining the necessary strength when making rice pasta includes the successive stages of soaking ground rice over a period of several hours and pre-gelatinising, cooling, extruding, post-gelatinising and drying it. By the gelatinisation of the starch grains, they are capable of their own to form a mass having the necessary cohesion. Moreover, binders are often used for increasing the cohesion between the starch grain. Examples of such binders are egg proteins, soluble proteins of whey and wheat gluten.

US-A-4 544 563 discloses a process for the production of rice and other pasta's which does not require a pre-gelatinisation of the rice so that lengthy steam treatment operations can be avoided and no large steaming installations are required. This known process comprises mixing a flour of a starchy material in an extrusion cooker with soft water and an ionic gelling agent such as an alginate as binder to obtain a dough containing from 35 to 55 % of water, gelatinising the dough by heating and kneading it in the extrusion cooker under a pressure of from 70 to 100 bar at a temperature of from 60°C to 100°C over a period of 20 to 120 seconds, cooling the dough to a temperature below 100°C, extruding it in the form of pasta, bringing the pasta into contact with water containing a cation such as divalent calcium which forms a gel with the ionic gelling agent, and drying the pasta. For making rice pasta, the rice dough was gelatinised in the second part of a multi-stage extrusion cooker for a period of about 90 seconds at a temperature just below 100°C. In the last part of the extruder, wherein the screws are arranged and adjusted to exert a thrust on the gelatinised dough to force it through the extrusion die, a cooling fluid is circulated in the jacket of this last part so that the dough is cooled to a temperature of between 75 and 80 °C.

A drawback of the process disclosed in US-A-4 544 563 is that it requires the use of an extrusion cooker enabling to heat the dough to a high temperature and to cool it again down before extruding it through the extrusion head. Moreover, an ionic gelling agent has to be added to the dough and, after having extruded the pasta, it has to be treated with water containing a cation which forms a gel with the ionic gelling agent in order to obtain the necessary cohesion of the pasta.

US-A-5 786 018 discloses a process for the preparation of rice noodles which does not require an extrusion cooker but which can instead be carried out by means of a standard pasta extruder. However, just as in the conventional process referred to hereabove, the process disclosed in US-A-5 786 018 requires a steaming treatment of the rice flour in particular for a period of from 10 minutes to 1 hour, and preferably from 20 to 45 minutes, to pre-gelatinise the starch in the rice flour from 20 to 90 % and preferably from 60 to 80 %. By using subsequently hot water from 80 °C to boiling for preparing the dough, the starch is further gelatinised by 5 to 30 %. Adapting a conventional pasta producing machine to a rice pasta producing machine in accordance with the teachings of US-A-5 786 018 would thus require the installation of a quite large steaming installation.

An object of the present invention is therefore to provide a new process for the production of rice pasta which can be carried out at an economically acceptable production rate on a pasta extruder showing only one single heat exchanging circuit around the extruder screw and which does not require the use of an ionic gelling agent or another binder, or to provide a steaming installation for pre-gelatinising the rice, to be able to extrude the rice dough and to obtain the required cooked firmness.

To this end, the process according to the invention is characterised in that for preparing 100 parts on dry matter of said dough, use is made of X parts on dry matter of said ground rice and of Y parts on dry matter of potato starch, X being situated between 50 and 82 and Y being situated between 18 and 50.

It has been found quite surprisingly that by using such amounts of potato starch for preparing the rice dough, the dough can be extruded, in particular even with a pasta extruder showing only one single heat exchanging circuit around the extruder screw, and the produced rice pasta shows the required cooked firmness without having necessarily to steam the rice in advance or without having to add an ionic gelling agent or another binder. It has further been found the required degree of gelatinisation to be achieved in the extruder for obtaining the necessary cohesion of the extruded pasta requires a smaller amount of heat to be transferred in the extruder to the dough so that, for a same heat transfer capacity of the extruder, a larger production rate can be achieved. According to the present inventors, this can be explained due to the fact that potato starch gelatinises at a lower temperature than rice starch, more particularly at a temperature of about 63°C, and that the gelatinisation of potato starch is less endothermic, or requires in other words less energy than the gelatinisation of rice starch. Taste evaluation tests have shown that the presence of potato starch in the claimed amounts does not cause any deviating taste and that the pasta still shows a clear rice taste. Another advantageous effect of the addition of potato starch is that the rice pasta has a whiter colour compared to pasta produced from rice flour alone.

In an advantageous embodiment of the process according to the invention, use is made amongst said X parts on dry matter of ground rice of X' parts on dry matter of pre-gelatinised ground rice to prepare said 100 parts on dry matter of dough, X' and Y being selected so that the sum thereof is larger than 25 and preferably larger than 35. By using such amounts of pre-gelatinised rice, a higher degree of gelatinisation will more easily be obtained and it is more easy to obtain a pasta which shows a smooth and elastic structure after boiling during a period of for example about 7 minutes.

In a preferred embodiment of the process according to the invention, use is made of more than 25 parts on dry matter of said potato starch, and preferably of more than 35 parts on dry matter of said potato starch, for preparing said 100 parts on dry matter of dough. In this way it is also easier to obtain a higher degree of gelatinisation without having to use pre-gelatinised rice. It has indeed been found that the use of pregelatinised rice should be avoided not only due to the higher price of such rice product but especially also due to the adverse effects pregelatinised rice has on the colour and the taste of the pasta. The use of potato starch instead of ground rice enables, on the contrary, to produce a rice pasta having a whiter colour.

In a particular embodiment of the process according to the invention, said extruder comprises at least one screw extending in a screw cavity and an extruder head disposed downstream said screw cavity, the temperature of the dough in said screw cavity being controlled by circulating a first fluid through one single heat exchanging circuit arranged around said screw cavity. An advantage of this embodiment is that the process can be performed onto a conventional pasta producing machine after having applied at the most some minor modifications such as reducing the speed of the extruder screw and/or increasing the diameter of the core of this screw in order to be able to transfer homogeneously the required amount of heat to the rice dough.

Other particularities and advantages of the invention will become apparent from the following description of some particular embodiments of the process for the production of rice pasta and the rice pasta obtained thereby according to the present invention. The reference numerals used in this description relate to the annexed drawings wherein the single figure shows a schematic view through a conventional pasta extruder modified to produce rice pasta.

The invention concerns a new process for the production of rice pasta. By the term rice pasta is understood a pasta which contains per 100 parts dry matter at least 50 parts on dry matter of rice. Like regular wheat pasta, the rice pasta may show different shapes and may for example be in the form of spaghetti, coils, shells, torselli, noodles, etc. The rice pasta will usually be dried, for example to a moisture content of 12.5% by weight or lower or it may be a so-called fresh pasta showing a higher moisture content of for example 28% by weight.

For producing 100 parts on dry matter of the rice pasta, use is made in accordance with the invention of 50 to 82 (=X) parts on dry matter of rice. Rice which is readily available on the market usually shows a moisture content of between 12.5 and 14.5% by weight. This rice embraces both untreated rice and pre-gelatinised rice which is generally more expensive than untreated rice. In order to exclude the influence of a varying moisture content to the rice and the other components of the rice pasta, the parts by weight of the different ingredients are expressed in parts on dry matter.

In addition to the rice, use is further made in the process according to the invention of 18 to 50 (=Y) parts on dry matter of potato starch. This potato starch will usually show a dry matter content of between 18.5 and 20.5% by weight. Potato starch showing a dry matter content falling outside this range can however also be applied.

The different ingredients of the rice pasta are preferably first dry mixed with one another. Subsequently water is added to the mixture to prepare a dough having for example a moisture content of between 35 and 55%, and in particular of between 46 and 53%. This dough is forwarded to an extruder wherein the dough is not only kneaded under pressure and pressed through an extrusion die in the form of pasta as in a regular wheat pasta producing process but wherein the dough is moreover heated to gelatinise at least partially the starch present therein. Due to this gelatinisation, the necessary cohesion is obtained to be able to extrude the pasta and to obtain the desired cooked firmness. The starch in the dough is in particular gelatinised to a degree of at least 55% and preferably to a degree of at least 68%.

For extruding the pasta, use can be made of a so-called extrusion cooker which shows an extruder screw extending through different sections wherein the temperature can be controlled by means of separate heating or cooling circuits. An advantage of the process according to the invention is however that it can also be carried in a conventional pasta extruder, possibly after having applied some minor modifications thereto, which differs from an extrusion cooker basically by the fact that it shows only one heat exchanging circuit around the extruder screw. As explained hereabove, in a regular wheat pasta production process, this heat exchanging circuit is a cooling jacket used to keep the temperature of the dough sufficiently low to avoid deterioration of the gluten.

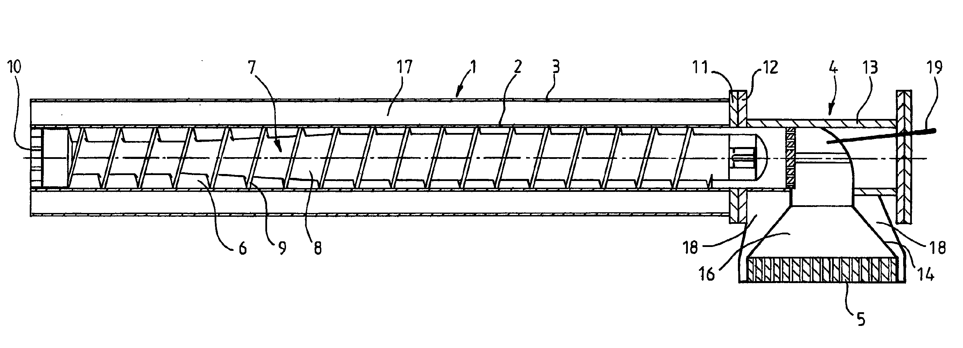

Figure 1 shows a schematic cross-sectional view of a conventional pasta extruder which can be used for producing the rice pasta in accordance with the present invention. The extruder comprises a double walled cylinder 1, showing an inner wall 2 and a concentric outer wall 3, followed by an extruder head 4 wherein an extrusion die 5 is mounted.

The double walled cylinder 1 defines a cylindrical inner chamber 6 wherein an extruder screw 7 is rotatably mounted. The extruder screw 7 shows a core 8 and a helical screw blade 9 arranged on this core and engaging the inner surface of the inner wall 2 of the double walled cylinder 1. One end of the double walled cylinder 1 shows an inlet 10 for introducing the dough in the extruder. The opposite end of the double walled cylinder 1 is provided with a flange 11 arranged to fix the extruder head 4 provided with a similar flange 12 to the double walled cylinder 1.

The extruder head 4 comprises by a cylindrical part 13, fixed by means of the flange 12 to the double walled cylinder 1 so that it forms an extension of this cylinder 1. At the bottom of this cylindrical part 13, a double walled conical outlet part 14 is provided, in the bottom of which is mounted the extrusion die 5. For extruding pasta, dough is introduced in the inner chamber 6 of the double walled cylinder 1 through the open end 10 thereof. Due to the rotation of the screw 7, the dough is urged under a pressure of about 75 to 100 bars into the cavity 16 formed by the cylindrical and the conical outlet part of the extruder head 4. As a result of the pressure in the extruder head 4, the dough is pressed through the extrusion die 5 in the form of pasta and is cut of by means of a rotating knife scraping over the outer surface of the extrusion die.

The first part of the extruder, i.e. the double walled cylinder 1, defines a cavity or a jacket 17 forming a heat exchanging circuit through which a heating or cooling fluid can be circulated. The double walled conical outlet part 14 of the extruder head 4 defines a further cavity or jacket 18 forming a further heat exchanging circuit through which a heating or cooling circuit can be circulated. In the first part of the extruder, the inner heat transfer surface of the inner wall 2 is relatively large compared to the amount of dough situated in this part between the core 8 of the extruder screw 7 and the inner wall 2 so that the temperature of the dough can be substantially increased in this part of the extruder. In the illustrated example, this was more particularly achieved by using a screw with a core 8 showing a larger diameter whereby the volume of the screw chamber 6 was reduced. Instead of using a screw 7 with a thicker core 8, one could however also consider reducing the rotational speed thereof so that the dough remains for a longer period of time in the screw chamber 6. Compared to the first part of the extruder, the inner heat transfer surface of the extruder head 4 is much smaller with respect to the amount of dough present in the extruder head. Moreover, there is no longer an active mixing of the dough. This means that the temperature control of the dough in the extruder head is more restricted than in the first part of the extruder.

To enable to produce rice pasta on an extruder as described with reference to Figure 1, at least 18 parts on dry matter of potato starch is introduced in the dough per 100 parts on dry matter thereof. Compared to rice starch, potato starch gelatinises more easily, more particularly at a temperature of about 63°C instead of at a temperature of about 82°C for rice starch. By combining rice starch with potato starch an extrudable dough is obtained and the pasta produced therefrom shows the required cooked firmness. Although this can achieved without the use of binders such as ionic gelling agents, proteins like the white of chicken eggs, gluten, etc. the present invention does not exclude the use of such additives. Moreover, the addition of other additives such as colourings, flavourings like curry powder and salt, vegetable sauces like tomato sauce, etc. is also not excluded by the present invention, in particular not when the additives are added in a range of 0 to 5% on dry matter of the final product. An additive which is used in a preferred embodiment of the invention is an emulsifier, in particular a monoglyceride. Such an emulsifier is preferably used in an amount of 0.1 to 4 parts by weight per 100 parts on dry matter of dough, more preferably in an amount of 0.5 to 2.5 parts by weight and most preferably in an amount of 0.8 to 1.8 parts by weight. The emulsifier, in particular the monoglyceride, acts as a lubricant so that the dough can be better and more homogeneously kneaded and a pasta is produced having a nice, smooth surface. It further reduces the hydrophilic properties of the pasta which is important to produce a pasta which shows a firm, elastic bite.

In accordance with the invention, use can be made of pregelatinised ground rice. An advantage of such pre-gelatinised rice is that the minimum degree of gelatinisation of the dough can be achieved more easily. As explained hereabove, potato starch gelatinises more easily than rice starch. In an advantageous embodiment of the process according to the invention, use is therefore made amongst the X parts on dry matter of rice of X' parts on dry matter of pre-gelatinised rice, more particularly so that the sum of the amount X' of pre-gelatinised rice and the amount Y of potato starch is larger that 25 and preferably larger than 35 parts on dry matter per 100 parts on dry matter of dough. In this way, it is easier to produce a pasta, which shows after a cooking time of for example 7 minutes, a smooth instead of a somewhat granular structure. On the other hand, the production rate of the extruder could possibly be increased.

In a preferred embodiment of the process according to the invention, use is made of less than 15 parts on dry matter of pregelatinised rice to prepare 100 parts on dry matter of dough and more preferably of less than 10, most preferably less than 5, parts on dry matter of pre-gelatinised rice. It has indeed been found that pregelatinised rice has an undesired effect on the colour and the taste of the produced pasta. In accordance with the invention, a smoother bite and possibly a higher production rate can however also be achieved by using more potato starch instead of pre-gelatinised rice, i.e. by using more than 25, preferably of more than 35, parts on dry matter of potato starch to prepare 100 parts on dry matter of dough. By using such amounts of potato starch, a whiter pasta is obtained which is smoother after cooking and which has still a clear rice taste without any taste deviations. Amongst the Y parts on dry matter of potato starch used to prepare 100 dry matter parts of dough, use is preferably made of more than 5 parts on dry matter of pre-gelatinised potato starch and more preferably of more than 10 parts on dry matter of potato starch. The use of such pregelatinised potato starch further reduces the amount of energy which has to be transferred in the extruder to the dough to obtain the required gelatinisation.

In the extruder, the temperature of the dough is preferably controlled so that it rises above 80°C and preferably above 82°C but remains below 100°C. In this way, at least a portion of the rice starch will gelatinise contributing thereby to the required minimum gelatinisation so that the amount of potato starch and optionally of the pre-gelatinised rice can be selected more freely. Preferably, the temperature of the dough is maintained in the extruder for 20 to 150 seconds, and preferably for 30 to 60 seconds, above 80°C.

When using an extrusion cooker, the temperature can easily be allowed to rise until just below 100°C in view of the fact that, after the heating jacket around the screw chamber, a further jacket is provided around this screw chamber through which a cooling fluid can be circulated to cool the dough down to the temperature required for extruding it through the extrusion die. Since the dough is still being kneaded, the temperature thereof can be reduced quite uniformly.

From the description of the conventional pasta extruder given with reference to figure 1, it will be clear that a substantial and homogeneous decrease of the temperature of the dough cannot be obtained in the extruder head of such an extruder. An advantage of the process according to the invention is however that it does not require the application of high temperatures approaching 100°C to achieve sufficiently quickly the required minimum degree of gelatinisation. In a preferred embodiment, the temperature of the dough is more particularly controlled in the extruder so that it remains below 95°C and preferably below 93°C. In this way, the dough can be extruded at a relatively high flow rate by means of a conventional pasta extruder notwithstanding the fact that it is not designed to achieve a substantial cooling of the dough before extruding it through the extrusion die.

In a preferred embodiment of the process according to the invention, the extrusion is carried out by means of an extruder which is provided, just like the conventional pasta extruders, with only one heat exchanging circuit around the screw cavity 6 wherein the dough is heated and kneaded. Tests have shown that, when applying the dough mixture according to the invention, this dough can be extruded by means of an extruder illustrated in Figure 1, the screw chamber of which has a heat transfer surface in contact with the heat exchanging jacket 17 of about 1 m², at a rate of at least 120 kg/u, in particular at a rate of at least 150 kg/u and more particularly even at a rate of at least 200kg/u. Notwithstanding the limited heat exchanging possibilities of such an extruder having in general a screw chamber with a heat transfer surface of z m², the dough is therefore extruded in this preferred embodiment at a rate of at least 120*z kg/u, in particular at a rate of at least 150*z kg/u and more particularly even at a rate of at least 200*z kg/u. In the tests performed, the fluid circulated in the jacket 17 had a temperature of between 80 and 95°C and more in particular between 85 and 93°C whilst the dough was made with water at a temperature of about 25°C.

In a preferred embodiment of the process according to the invention, the dough is prepared with water at a temperature higher than 25°C and preferably higher than 40°C. In this way it is easier to achieve the desired temperature in the extruder and to reduce fluctuations thereof since a smaller temperature rise is required. The temperature of the water is however preferably lower than 60°C in order to avoid an undesired gelatinisation to the starch in the mixer.

After having extruded the pasta, it can be dried to the desired maximum moisture content of 12.5% or it can be packed, as a fresh product, with a higher moisture content. Before packaging or drying the pasta, it can also be subjected to an additional steaming and/or boiling process in order to prepare an instant rice pasta.

### Example 1

In this example use was made of an extruder as illustrated in Figure 1 showing a screw chamber with a heat transfer surface of about 1 m² and with an extruder screw defining a volume between its screw blade of about 18.2 I (length of the extruder screw = 1886 mm, outer diameter of the screw blade = 170 mm). The following table gives details concerning the ingredients which were first homogeneously mixed in a dry mixer.

| Dry mixture | |
|---|---|
| Ingredient | Percentage (on dry matter) |
| Rice flour | 59.3 |
| Potato starch | 27.6 |
| Pre-gelatinised potato flour | 11.9 |
| Vegetable monoglycerids | 1.2 |

The dry mixture was mixed continuously with water during 10 to 20 minutes in order to obtain a dough containing from 46 to 53 % of water. The temperature of the water and of the produced dough comprised about 25°C. Via a vacuum mixing tank, the dough was fed through the single-screw extruder illustrated in Figure 1. The dough was kneaded and subjected to considerable shearing stresses when being pressed forward by the extruder screw. A pressure of about 75 to 95 bar was reached. The extruder was thermostatically temperature-controlled by means of the fluid that circulates in the jacket 17 of the cylinder 1. During the test, the temperature of this fluid varied between 87 and 92°C. In the extruder head, the dough temperature was somewhat reduced by circulating a second fluid through the jacket 18 having a temperature varying between 67 and 71°C. The temperature of the dough was measured by means of the thermometer 19 projecting in the extruder head. During the test this temperature varied between 75 and 84°C. A die bearing the shape selected for the pasta was mounted at the outlet of the extruder. At the outlet of the die, the pasta was cut and sent to a vibrating pre-drier, where the product was ventilated for a few minutes at a temperature of about 50 °C. The pre-dried product was dried in a drier at temperatures of about 40 - 50 °C with a relative humidity of about 70 - 75 % until the product reached a final humidity of approximately 10 - 11 %. The percent of cooked (gelatinised) starch in the rice pasta was determined using a Total Starch Assay Kit (Megazyme International Ireland, Ltd; Wicklow Ireland) and comprised about 72%. The rice pasta obtained had characteristics which were substantially identical to those of conventional wheat pasta. The product did not stick after draining, had an elastic texture and had a white colour. Because of the lack of gluten the product was suitable for diets for individuals who do not tolerate gluten.

### Example 2

Rice pasta was produced in the manner described in Example 1, but using water of about 55 °C to obtain the dough. The pasta obtained has a quality comparable to that obtained in Example 1.

### Example 3

Rice pasta was produced in the manner described in Example 1, but the pre-dried pasta was steamed during 6 minutes at a temperature of about 100 °C before the product was dried. The resulting pasta was prepared by pouring boiling water over the product, let stand during a few minutes and pouring of the water.

### Example 4

A dry mixture containing (on dry matter) 50 % rice flour, 10 % pre-gelatinised rice flour and 40 % potato starch was prepared. This dry blend was mixed with water in order to form a dough having a water content of about 50 % and was introduced into the extruder via a vacuum mixer. The dough was gelatinised at from 77 to 85 °C under a pressure of about 70 to 80 bars by means of the heat from a fluid circulating in the jackets of the cylinder and the heat generated by the friction in the cylinder. The gelatinised dough was extruded through a die and cut. The product was dried as described in Example 1. The rice pasta obtained did not stick after and during cooking. The behaviour of the pasta when chewed was that of a cooked Italian pasta 'al dente'.

### Example 5

A dry mixture containing (on dry matter) 76% rice flour, 16% potato starch, 7% pregelatinised potato starch and 1% monoglycerids was prepared. A dough was obtained by mixing the dry blend with water of about 55°C until a water content of about 50% and was introduced into the extruder used in example 1 via a vacuum mixer. The dough was gelatinised at from 77 to 85°C under a pressure of about 70 to 80 bars by means of the heat from a fluid circulating in the jackets of the cylinder and the heat generated by the friction in the cylinder. The gelatinised dough was extruded through a die and cut. The product was dried as described in Example 1. The rice pasta obtained could be extruded well and had a good cooked firmness but had a less elastic, cohesive bite than the endproducts obtained in example 1, 2, 3 and 4.

## Claims

1. A process for the production of rice pasta comprising the steps of:
- mixing at least ground rice with water to prepare a dough;
- at least partially gelatinising the dough by heating and kneading it under pressure in an extruder; and
- extruding the gelatinised dough by means of said extruder in the form of pasta,
**characterised in that** for preparing 100 parts on dry matter of said dough, use is made of X parts on dry matter of said ground rice and of Y parts on dry matter of potato starch, X being situated between 50 and 82 and Y being situated between 18 and 50.

2. A process according to claim 1, **characterised in that** amongst said X parts on dry matter of ground rice use is made of X' parts on dry matter of pre-gelatinised ground rice to prepare said 100 parts on dry matter of dough, X' and Y being selected so that the sum thereof is larger than 25 and preferably larger than 35.

3. A process according to claim 1 or 2, **characterised in that** that amongst said X parts on dry matter of ground rice use is made of X' parts on dry matter of pre-gelatinised ground rice to prepare said 100 parts on dry matter of dough, X' being smaller than 15, preferably smaller than 10 and most preferably smaller than 5.

4. A process according to any one of the claims 1 to 3, **characterised in that** for preparing said 100 parts on dry matter of dough use is made of more than 25 parts on dry matter of said potato starch and preferably of more than 35 parts on dry matter of said potato starch.

5. A process according to any one of the claims 1 to 4, **characterised in that** at least a portion of said Y parts on dry matter of potato starch used to prepare said 100 parts on dry matter of dough is pre-gelatinised, use being in particular made amongst said Y parts on dry matter of potato starch of more than 5 parts on dry matter of pregelatinised potato starch and preferably of more than 10 parts on dry matter of said pre-gelatinised potato starch.

6. A process according to any one of the claims 1 to 7, **characterised in that** the dough is gelatinised in said extruder so that at least 55%, preferably at least 68%, of the starch present in the extruded dough is gelatinised.

7. A process according to any one of the claims 1 to 6, **characterised in that** the temperature of the dough is controlled in said extruder so that it rises above 80 °C, preferably above 82 °C but remains below 100 °C.

8. A process according to any one of the claims 1 to 7, **characterised in that** the temperature of the dough is maintained in the extruder for 20 to 150 seconds above 80°C, preferably for 30 to 60 seconds above 80°C.

9. A process according to any one of the claims 1 to 8, **characterised in that** said extruder comprises at least one screw extending in a screw chamber and an extruder head disposed downstream said screw chamber, the temperature of the dough in said screw cavity being controlled by circulating a first fluid through one single heat exchanging circuit arranged around said screw chamber.

10. A process according to claim 9, **characterised in that** the temperature of the dough in said extruder head being controlled by circulating a second fluid through a further heat exchange circuit arranged in the extruder head.

11. A process according to claim 9 or 10, **characterised in that** said screw chamber has a heat transfer surface in contact with said heat exchanging circuit of z m² and the dough is extruded at a flow rate of at least 120*z kg/u, in particular at a flow rate of at least 150*z kg/u and more in particular at a flow rate of at least 200*z kg/u.

12. A process according to any one of the claims 1 to 11, **characterised in that** the temperature of the dough is controlled in said extruder so that it remains below 95 °C, preferably below 93 °C.

13. A process according to any one of the claims 1 to 12, **characterised in that** before being supplied to said extruder, the dough is composed in a mixer wherein said water is introduced at a temperature higher than 25° C and preferably higher than 40° C.

14. A process according to any one of the claims 1 to 13, **characterised in that** an emulsifier is admixed into said dough, in particular a monoglyceride.

15. A process according to any one of the claims 1 to 14, **characterised in that** it further comprises the steps of steaming and/or boiling the extruded pasta and of subsequently drying the steamed and/or boiled pasta.

16. Rice pasta comprising ground rice which is at least partially gelatinised, **characterised in that** per 100 parts on dry matter the rice pasta contains between 18 and 50, preferably between 25 and 50 and most preferably between 35 and 50 parts on dry matter of potato starch.
